Europäisches Patentamt

European Patent Office

Office européen des brevets

(19)

(11) Veröffentlichungsnummer: **0 249 296**

**A2**

(12) **EUROPÄISCHE PATENTANMELDUNG**

(21) Anmeldenummer: **87201086.3**

(22) Anmeldetag: **05.06.87**

(51) Int. Cl.⁴: **G01B 11/06 , G08B 19/02**

(30) Priorität: **10.06.86 DE 3619538**

(43) Veröffentlichungstag der Anmeldung:
**16.12.87 Patentblatt 87/51**

(84) Benannte Vertragsstaaten:
**DE FR GB IT NL SE**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT NL SE**

(72) Erfinder: **Martens, Gerd**
**Reinskamp 1**
**D-2000 Hamburg 74(DE)**

(74) Vertreter: **Peters, Carl Heinrich, Dipl.-Ing. et al**
**Philips Patentverwaltung GmbH**
**Wendenstrasse 35 Postfach 10 51 49**
**D-2000 Hamburg 1(DE)**

(54) **Anordnung zum Feststellen der Vereisung.**

(57) Eine Anordnung zum Feststellen der Vereisung
der Oberfläche eines Gegenstandes, die automatisch
bei Überschreiten einer vorgegebenen Dicke der
Vereisungsschicht ein Alarmsignal erzeugt, ist gekennzeichnet durch einen optischen Leiter, bei dem
die Strahlung der Quelle auf mindestens eine im
Bereich der zu prüfenden Oberfläche liegenden, von
außerhalb des Gegenstandes zugänglichen Leiterfläche auftrifft, einen Detektor, der von dieser Leiterfläche kommende Strahlung empfängt und in ein
elektrisches Signal umsetzt, und eine Auswerteeinrichtung, die das Signal mit einem Schwellwert vergleicht und abhängig vom Vergleichsergebnis ein
Alarmsignal erzeugt.

FIG.1a    FIG.1b    FIG.1c    FIG.1d

## "Anordnung zum Feststellen der Vereisung"

Die Erfindung betrifft eine Anordnung zum Feststellen der Vereisung der Oberfläche eines Gegenstandes.

Die Vereisung stellt insbesondere bei Flugzeugen ein großes Problem dar, da dadurch die Flugeigenschaften und das Gewicht des Flugzeugs so stark beeinflußt werden können, daß die Flugfähigkeit beeinträchtigt ist und ein Absturz eintreten kann. Wenn eine Vereisung an Flugzeugen vor dem Start festgestellt wird, wird die Vereisung durch entsprechende Behandlung vor dem Start beseitigt, während bei Beginn einer Vereisung während des Fluges der Pilot unverzüglich Gegenmaßnahmen ergreifen muß, insbesondere eine andere Flughöhe wählen muß. In beiden Fällen ist es wichtig, die Vereisung rechtzeitig und zuverlässig feststellen zu können.

Aufgabe der Erfindung ist es daher, eine Anordnung zum Feststellen der Vereisung der Oberfläche eines Gegenstandes anzugeben, die automatisch bei Überschreiten einer vorgegebenen Dicke der Vereisungsschicht ein Alarmsignal erzeugt.

Diese Aufgabe wird erfindungsgemäß gelöst durch eine Quelle zum Erzeugen optischer Strahlung, einen optischen Leiter, bei dem die Strahlung der Quelle auf mindestens eine im Bereich der zu prüfenden Oberfläche liegenden, von außerhalb des Gegenstandes zugänglichen Leiterfläche auftrifft, einen Detektor, der von dieser Leiterfläche kommende Strahlung empfängt und in ein elektrisches Signal umsetzt, und eine Auswerteeinrichtung, die das Signal mit einem Schwellwert vergleicht und abhängig vom Vergleichsergebnis ein Alarmsignal erzeugt.

Die Erfindung beruht auf dem Gedanken, daß die Reflexion bzw. die Brechung an der Oberfläche des optischen Leiters geändert wird, wenn diese mit Eis bedeckt ist, so daß anhand der von der Leiterfläche kommende Strahlung das Vorliegen einer Vereisung und unter gewissen Bedingungen auch deren Ausmaß bestimmt werden kann.

Die veränderte Reflexion bzw. Brechung an der Oberfläche des optischen Leiters kann auf verschiedene Weise ausgenutzt werden. Nach einer ersten Ausgestaltung der Erfindung ist es zweckmäßig, daß die Strahlung von innerhalb des optischen Leiters auf die Leiterfläche trifft und der Detektor die reflektierte Strahlung empfängt. In diesem Falle wird die Strahlung im wesentlichen reflexionsfrei in den optischen Leiter so eingekoppelt, daß sie von innen auf die Leiterfläche trifft und reflektiert wird.

Die Form des optischen Leiters kann nahezu beliebig gewählt werden. Eine zweckmäßige Ausbildung ist dadurch gekennzeichnet, daß der optische Leiter die Form eines Prismas hat, dessen Flächen aus der Oberfläche des Gegenstandes herausragt, daß die Strahlung der Quelle als im wesentlichen paralleles Bündel auf eine Fläche des Prismas gerichtet ist und der Detektor von der gegenüberliegenden Fläche des Prismas reflektierte Strahlung empfängt. Ein solches Prisma, beispielsweise aus Quarzglas, kann leicht hergestellt werden. Dabei ist es besonders zweckmäßig, daß das Prisma einen Winkel zwischen den Flächen von etwa 90° einschließt und das Strahlenbündel im wesentlichen parallel zur Winkelhalbierenden auf die eine Fläche des Prismas gerichtet ist. Auf diese Weise tritt die reflek tierte Strahlung bei fehlender Vereisung parallel zur optischen Strahlung der Quelle wieder aus der Grundfläche des Prismas aus, so daß sich eine einfache Konstruktion ergibt. Eine einfache Ausbildung des Prismas besteht ferner darin, daß das Prisma ein Kegel ist. Diese Form läßt sich besonders einfach herstellen.

Eine andere Ausführung des optischen Leiters besteht darin, daß der optische Leiter ein langgestreckter Profilkörper ist, von dem mindestens ein Teil der Profilfläche de Leiterfläche bildet, und daß die Strahlung der Quelle als im wesentlichen paralleles Bündel in einem derart flachen Winkel auf die Leiterfläche gerichtet ist, bei dem im Falle von Luft als Medium unmittelbar außerhalb des Leiters Totalreflexion auftritt. Der flache Winkel wird zweckmäßig so gewählt, daß bei Bedeckung des optischen Leiters mit Eis die Totalreflexion praktisch aufgehoben wird, so daß an der Stelle, an der die Strahlung bei nicht bedecktem optischen Leiter austritt, bei Eisbedeckung praktisch keine Strahlung mehr austritt.

Eine andere Ausgestaltung der Erfindung ist dagegen dadurch gekennzeichnet, daß die Strahlung von außerhalb des optischen Leiters auf die Leiterfläche trifft und der Detektor die den optischen Leiter durchdringende Strahlung empfängt. Die Leiterfläche kann so ausgebildet werden, daß bei fehlender Eisbedeckung nur eine geringe Reflexion der von außerhalb auftreffenden Strahlung erfolgt, die jedoch bei Bedeckung mit einer Eisschicht in eine mehrfache Reflexion innerhalb der Eisschicht übergeht und dadurch zu erheblichen Verlusten führt, so daß die den optischen Leiter durchdringende Strahlung bei Eisbedeckung stark geschwächt wird.

Für eine günstige mechanische Gestaltung der gesamten Anordnung ist es zweckmäßig, daß die Quelle optischer Strahlung und der Detektor über Lichtleiter an den optischen Leiter angekoppelt sind. Auf diese Weise kann die Quelle der optischen Strahlung und die Auswerteeinrichtung von dem Prisma relativ weit entfernt an einer zweckmäßigen Stelle angeordnet werden.

Die Wellenlänge der optischen Strahlung kann ebenfalls in weiten Grenzen gewählt werden. Zweckmäßig ist es jedoch, daß die optische Strahlung IR-Strahlung nahe dem sichtbaren Bereich ist. Für einen derartigen Bereich der optischen Strahlung sind preisgünstige Bauelemente vorhanden, und die Gefahr einer Verfälschung des Meßsignals ist nur gering.

Ausführungsbeispiele der Erfindung werden nachstehend anhand der Zeichnung erläutert. Es zeigen

Fig. 1a bis d den Verlauf der Strahlung in einem Prisma bei verschiedener Bedeckung,

Fig. 2 eine Anordnung mit einer Kopplung über Lichtleiter zwischen Prisma und Auswerteeinrichtung mit Strahlungsquelle,

Fig. 3 die Ausführung des optischen Leiters mit Totalreflexion,

Fig. 4 eine Anordnung, bei der die optische Strahlung von außen auf die Leiterfläche trifft.

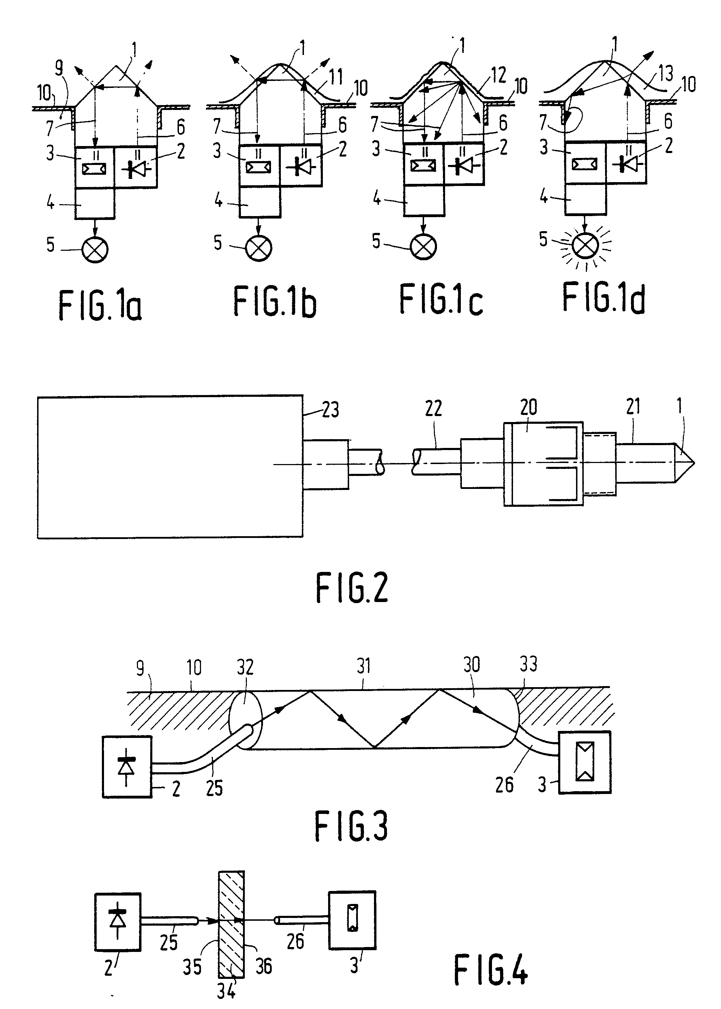

In Fig. 1 ist eine Anordnung mit einem Prisma, das aus der auf Vereisung zu prüfenden Oberfläche 10 eines Gegenstandes 9 herausragt, unter vier verschiedenen Betriebsbedingungen dargestellt. In Fig. 1a ist die Oberfläche des Prismas 1 frei, so daß das von der Quelle 2 ausgesandte, im wesentlichen parallele Bündel 6 optischer Strahlung auf die eine Fläche des Prismas fällt. Es sei hier angenommen, daß der Dachwinkel des Prismas 90° ist und das Bündel 6 optischer Strahlung parallel zur Winkelhalbierenden verläuft, so daß das reflektierende Strahlenbündel 7 ebenfalls parallel dazu aus dem Prisma 1 wieder austritt. An der Austrittsstelle ist ein Detektor 3 angeordnet, der die empfangene Strahlung in ein elektrisches Signal umwandelt und dieses einer Auswerteeinrichtung 4 zuführt, die beispielsweise einen üblichen Komparator enthält, der das Detektorsignal mit einem festen vorgegebenen Signal vergleicht. Dieses Signal kann auch von der Strahlung abgeleitet sein, die von der Strahlenquelle 2 erzeugt wird, um fertigungs-oder altersbedingte Unterschiede der Strahlung der Quelle 2 zu berücksichtigen. Die Auswerteeinrichtung 4 erzeugt ein Alarmsignal, das beispielsweise einer Signallampe 5 zugeführt wird. Wenn das Strahlenbündel 7 eine ausreichende Intensität hat, die aufgrund von Brechung und Streuung an den Oberflächen des Prismas 1 geringer ist als die des Strahlenbündels 6 von der Quelle 2, wird kein Alarmsignal erzeugt.

In Fig. 1b ist angenommen, daß die Oberfläche des Prismas 1 mit einer Wasserschicht 11, beispielsweise infolge Regens, bedeckt ist. Eine solche Wasserschicht bedeckt die Oberfläche im wesentlichen gleichmäßig, so daß das Strahlenbündel 6, wenn es aus dem Prisma 1 austritt und in die Wasserschicht eindringt, an deren Oberfläche im wesentlichen in gleicher Richtung wie bei trockenem Prisma reflektiert wird, so daß der reflektierte Strahl 7 im wesentlichen in der gleichen Richtung wie bei trockenem Prisma austritt, wobei lediglich die Intensität durch die Mehrfachbrechung und gegebenenfalls Streuung etwas verringert sein kann. Dies kann durch Einstellung des Schwellwertes in der Auswerteeinrichtung 4 berücksichtigt werden, so daß unter diesen Umständen noch kein Alarmsignal erzeugt wird.

In Fig. 1c ist angenommen, daß die Oberfläche des Prismas 1 von einer Rauhreifschicht 12 bedeckt ist. Sofern hierbei ein wesentlicher Teil des Strahlenbündels 6 nicht von der Oberfläche des Prismas 1 reflektiert, sondern in die Rauhreifschicht 12 gebrochen wird, ist die reflektierte und die gestreute Strahlung 7, die auf den Detektor 3 trifft, noch ausreichend, um bei entsprechender Einstellung des Schwellwertes in der Auswerteeinrichtung 4 die Erzeugung eines Alarmsignals zu verhindern.

In Fig. 1d ist schließlich angenommen, daß das Prisma 1 mit einer Eisschicht 13 bedeckt ist. Diese Eisschicht 13 ist jedoch nicht mehr gleichmäßig, so daß das Strahlenbündel 6 von der Oberfläche der Eisschicht nicht mehr in der ursprünglichen Richtung, sondern schräg dazu reflektiert wird, und die reflektierte Strahlung 7 trifft dann nicht mehr auf den Detektor 3. Dieser gibt damit ein wesentlich kleineres elektrisches Signal ab als bei den anderen Bedingungen, wobei dieses Signal nun unter der in der Auswerteeinrichtung 4 eingestellten Schwelle liegt, so daß letztere ein Alarmsignal erzeugt und die Lampe 5 zum Aufleuchten bringt. Dadurch wird eine Vereisung der Oberfläche des Gegenstandes 10 zuverlässig angezeigt.

In Fig. 2 ist eine Anordnung dargestellt, bei der ein kegelförmiges Prisma 1 den Abschluß eines runden Stabes 21 beispielsweise aus Glas mit einem Durchmesser von beispielsweise 10 mm bildet, der in einer Halterung 20 tefestigt ist, die in ein entsprechendes Gegenstück unter der Oberfläche eines Gegenstandes befestigt, beispielsweise eingeschraubt wird. An den Boden des Glasstabes 21 ist ein Lichtleiter 22 angebracht, dessen anderes Ende in ein Gehäuse 23 führt, das die Quelle 2 für optische Strahlung sowie den Detektor 3 und die Auswerteeinrichtung 4 enthält. Da die Verluste in dem Lichtleiter 22 nur gering sind, kann dies relativ lang sein, so daß das Gehäuse 23 weit entfernt von dem Prisma 1 angebracht werden kann. Der Lichtleiter 22 ist hier als Hin-und Rückleiter verwendet worden, wobei die Strahlungen der beiden Richtungen insbesondere im Gehäuse 23 auf bekannte Weise wieder getrennt werden können. Stattdessen können selbstverständlich auch zwei parallele Lichtleiter für jeweils eine Richtung der optischen Strahlung verwendet werden.

Bei der Ausführung nach Fig. 3 ist der optische Leiter ein langgestreckter Profilkörper 30, dessen eine Oberfläche 31 mit der auf Vereisung zu prüfenden Oberfläche 10 eines Gegenstandes 9 abschließt, so daß weitgehend eine glatte Fläche entsteht. Es ist klar, daß der Profilkörper 30 jedoch auch aus der Oberfläche 10 herausragen oder ganz davor liegen kann.

Die von der Quelle 2 erzeugte optische Strahlung wird über einen Lichtleiter 25 der einen Endfläche 32 des Profilkörpers 30 so zugeführt, daß die Strahlung als ein etwa paralleles Bündel in einem flachen Winkel zur Achse des Profilkörpers eintritt und in diesem Winkel auch auf die außen liegende Oberfläche 31 trifft. Dies kann auch beispielsweise dadurch geschehen, daß die Endfläche 32 in einem entsprechenden Winkel zur Achse des Profilkörpers 30 geneigt ist.

Die Strahlung wird an der Fläche 31 total reflektiert und auf die gegenüberliegende Fläche des Profilkörpers 30 gelenkt, und nach mehreren totalen Reflexionen an der Fläche 31 und der gegenüberliegenden Fläche tritt die Strahlung - schließlich an der Endfläche 33 des Profilkörpers 30 aus und in einen weiteren Lichtleiter 26 ein, der die austretende Strahlung zum Detektor 3 leitet. Die auf den Detektor 3 folgenden Elemente sind hier weggelassen.

Wenn die Fläche 31 mit Eisschicht bedeckt ist, wird die Strahlung nicht mehr an dieser Fläche total reflektiert, und sie tritt aus dem optischen Leiter heraus, so daß an der Endfläche 33 des optischen Leiters 30 keine oder nur wenig Strahlung mehr auf den Lichtleiter 26 trifft. Selbst wenn das Strahlenbündel an der Außenfläche der Eisschicht reflektiert wird, würde der Weg der Strahlung durch den optischen Leiter 30 so verändert, und zwar um so mehr, je mehr Reflexionen zwischen den beiden gegenüberliegenden Flächen auftreten, daß eine an der Endfläche 33 austretende Strahlung nicht an der Stelle austritt, an der Lichtleiter 26 angebracht ist. In jedem Falle empfängt der Detektor 3 im Falle einer Bedeckung der Oberfläche 31 des optischen Leiters 30 mit Eis wesentlich weniger Strahlung, wodurch in bereits beschriebener Weise eine Alarmmeldung abgeleitet werden kann.

Der Profilkörper 30 braucht kein runder Stab zu sein, sondern kann verschiedene Formen haben, insbesondere kann die der Fläche 31 gegenüberliegende Fläche auch flach sein.

In Fig. 4 ist eine Anordnung dargestellt, bei der die optische Strahlung von außerhalb auf den optischen Leiter 34 trifft, und zwar auf die Oberfläche 35, auf der sich gegebenenfalls Eis bildet. Die optische Strahlung wird wieder von einer Quelle 2 erzeugt und über einen Lichtleiter 25 geleitet, der so vor dem optischen Leiter 34 endet, daß zwischen dem Ende des Lichtleiters 25 und der Oberfläche 35 eine freie Strecke vorhanden ist. Der optische Leiter 34 ist hier als Platte ausgebildet, deren Oberfläche 35 im wesentlichen senkrecht zur Einfallsrichtung der Strahlung angeordnet ist. Bei entsprechender Ausbildung bzw. Behandlung der Oberfläche 35 tritt die auftreffende Strahlung weitgehend in den optischen Leiter 34 ein und an der gegenüberliegenden Oberfläche 36 ebenso weitgehend ungestört wieder aus, sofern keine Eisschicht vorhanden ist. Die austretende Strahlung wird vom Lichtleiter 26 aufgenommen und dem Detektor 3 zugeführt.

Im Falle einer Eisbedeckung der Oberfläche 35 und gegebenenfalls auch der Oberfläche 36 wird der eintretende Strahl an der Oberfläche der Eisschicht teilweise reflektiert und innerhalb der Eisschicht teilweise mehrfach reflektiert, so daß nur ein Teil der vom Lichtleiter 25 ausgesandten Strahlung in den optischen Leiter 34 eindringen kann. Der gleiche Effekt tritt dann nochmals an der Oberfläche 36 auf, wenn diese ebenfalls frei zugänglich ist, so daß sich dort auch eine Eisschicht bilden kann. Dadurch empfängt der Lichtleiter 26 im Falle der Vereisung eine zumindest wesentlich verringerte Strahlungsmenge, was vom Detektor 3 und die hier nicht dargestellten folgenden Schaltungen ausgewertet werden kann.

## Ansprüche

1. Anordnung zum Feststellen der Vereisung der Oberfläche eines Gegenstandes, gekennzeichnet durch eine Quelle zum Erzeugen optischer Strahlung, einen optischen Leiter, bei dem die Strahlung der Quelle auf mindestens eine im Bereich der zu prüfenden Oberfläche liegende, von außerhalb des Gegenstandes zugängliche Leiterfläche auftrifft, einen Detektor, der von dieser Leiterfläche kommende Strahlung empfängt und in ein elektrisches Signal umsetzt, und eine Auswerteeinrichtung, die das Signal mit einem Schwellwert vergleicht und abhängig vom Vergleichsergebnis ein Alarmsignal erzeugt.

2. Anordnung nach Anspruch 1, dadurch gekennzeichnet, daß die Strahlung von innerhalb des optischen Leiters auf die Leiterfläche trifft und der Detektor die reflektierte Strahlung empfängt.

3. Anordnung nach Anspruch 2,
dadurch gekennzeichnet, daß der optische Leiter die Form eines Prismas hat, dessen Flächen aus der Oberfläche des Gegenstandes herausragt oder bündig abschließt, daß die Strahlung der Quelle als im wesentlichen paralleles Bündel auf eine Fläche des Prismas gerichtet ist und der Detektor von der gegenüberliegenden Fläche des Prismas reflektierte Strahlung empfängt.

4. Anordnung nach Anspruch 3,
dadurch gekennzeichnet, daß das Prisma einen Winkel zwischen den Flächen von etwa 90° einschließt und das Strahlenbündel im wesentlichen parallel zur Winkelhalbierenden auf die eine Fläche des Prismas gerichtet ist.

5. Anordnung nach Anspruch 3 oder 4,
dadurch gekennzeichnet, daß das Prisma ein Kegel ist.

6. Anordnung nach Anspruch 2,
dadurch gekennzeichnet, daß der optische Leiter ein langgestreckter Profilkörper ist, von dem mindestens ein Teil der Profilfläche die Leiterfläche bildet, und daß die Strahlung der Quelle als im wesentlichen paralleles Bündel in einem derart flachen Winkel auf die Leiterfläche gerichtet ist, bei dem im Falle von Luft als Medium unmittelbar außerhalb des Leiters Totalreflexion auftritt.

7. Anordnung nach Anspruch 1,
dadurch gekennzeichnet, daß die Strahlung von außerhalb des optischen Leiters auf die Leiterfläche trifft und der Detektor die den optischen Leiter durchdringende Strahlung empfängt.

8. Anordnung nach einem der vorhergehenden Ansprüche,
dadurch gekennzeichnet, daß die Quelle optischer Strahlung und der Detektor über Lichtleiter an den optischen Leiter angekoppelt sind.

9. Anordnung nach einem der vorhergehenden Ansprüche,
dadurch gekennzeichnet. daß die optische Strahlung IR-Strahlung nahe dem sichtbaren Bereich ist.

FIG.1a  FIG.1b  FIG.1c  FIG.1d

FIG.2

FIG.3

FIG.4